# EUROPEAN PATENT APPLICATION

(11) **EP 3 388 790 A1**
(43) Date of publication of application: **17.10.2018**
(21) Application number: 18151924.0
(22) Date of filing: 16.01.2018
(51) Int. Cl.: G01C 21/36

(54) **INFORMATION OUTPUT SYSTEM FOR VEHICLE**

(30) Priority: 24.01.2017 JP 2017010644
(71) Applicant: TOYOTA JIDOSHA KABUSHIKI KAISHA, Toyota-shi, Aichi-ken, 471-8571 (JP)
(72) Inventor: TONE, Taisuke, Aichi-ken, 471-8571 (JP)
(74) Representative: J A Kemp

(57) **Abstract**

An information output system for a vehicle includes: an on-board device (2); and a server (3). The server is configured to communicate with the on-board device (2), and transmit, to the on-board device, information data including at least one of destination information data corresponding to a destination of the vehicle and first predetermined information data. The first predetermined information data includes at least one of first information corresponding to a current date or the current date and current time and second information on weather related to a current position of the vehicle. The on-board device (2) is configured to output, via a first output device (80, 83), at least one of a first still image, a first moving image, and a first sound. The first still image, the first moving image, and the first sound correspond to the destination information data or the first predetermined information data.

## Description

### BACKGROUND OF THE INVENTION

### 1. Field of the Invention

The invention relates to an information output system for a vehicle.

### 2. Description of Related Art

A technique of acquiring personal identification information of a user of a vehicle and controlling set states of devices of the vehicle (for example, an opening image in a navigation device or a seat position) corresponding to the acquired personal identification information is known (for example, see Japanese Unexamined Patent Application Publication No. 2002-340572 (JP 2002-340572 A)).

### SUMMARY OF THE INVENTION

In the above-mentioned related art, since use of a personal identification result is mainly intended, the same set states of devices in the vehicle are always set for the same user even when destinations, boarding dates and times, vehicle positions, and the like are different. The related art is useful when the set states of devices in the vehicle are only the set state of the seat position, but there is room for improvement in application to an information output system for a vehicle. For example, when information is output using an opening image in a navigation device and different images are reproduced depending on destinations, it is possible to obtain newest information of a current destination or to recall amusement at the destination, and driving can be more enjoyable for a user. When a newest commercial (for example, a newest version or an Internet-only version of a commercial produced with a story) or an image serving as a surprise is reproduced depending on a date or the like, it is also possible to enhance pleasure of boarding a vehicle and driving can be more enjoyable for a user.

The invention provides an information output system that outputs information data depending on a destination, a boarding date and time, a traveling state, and the like at the time of starting of a vehicle and the like.

An aspect of the invention provides an information output system for a vehicle. The information output system for a vehicle according to the aspect includes: an on-board device mounted in the vehicle; and a server. The server is configured to communicate with the on-board device, and transmit, to the on-board device, information data including at least one of destination information data corresponding to a destination of the vehicle and first predetermined information data including at least one of first information and second information. The first information corresponds to a current date or the current date and current time. The second information is on weather related to a current position of the vehicle. The on-board device is configured to perform an output process of outputting, via a first output device in the vehicle, at least one of a first still image, a first moving image, and a first sound. The first still image, the first moving image, and the first sound correspond to the destination information data or the first predetermined information data.

According to this configuration, at least one of a still image, a moving image, and a sound corresponding to information data based on the destination of the vehicle is output via the first output device in the vehicle. Accordingly, a user can obtain newest information on the current destination or recall an amusement at the destination and driving can be more enjoyable for the user.

According to this configuration, at least one of a still image, a moving image, and a sound corresponding to predetermined information data which has been transmitted from the server before the vehicle starts is output via the first output device in the vehicle at the time of starting of the vehicle. Accordingly, it is possible to output the predetermined information data at the time of starting of the vehicle, and information useful for subsequent driving or the like can be provided to a user.

In the aspect, the server may be configured to transmit the destination information data to the on-board device when the server is notified of the destination of the vehicle from a user of the vehicle.

In the aspect, the server may be configured to transmit the first information data to the on-board device before the vehicle is started.

In the aspect, the on-board device may be configured to perform the output process at, at least one of a time point at which the vehicle is started, a predetermined time point during movement of the vehicle to the destination, and a time point at which the vehicle arrives at the destination.

According to this configuration, at least one of a still image, a moving image, and a sound corresponding to information data based on the destination can be output at an appropriate time.

In the aspect, the destination information data may include information on weather of the destination when the destination is not a point indicating an establishment. The destination information data may include at least one of the information on weather of the destination and newest information of information on the establishment when the destination is the point indicating the establishment.

According to this configuration, it is possible to provide a user with useful information on the destination such as information on the weather of the destination or newest information on an establishment when the destination is a point indicating the establishment.

In the aspect, the information data may include second predetermined information data. The server may be configured to transmit, to the on-board device, the second predetermined information data including advice information corresponding to a traveling state of the vehicle. The output process may include outputting, via the first output device depending on the traveling state of the vehicle, at least one of a second still image, a second moving image, and a second sound. The second still image, the second moving image, and the second sound may correspond to the second predetermined information data.

According to this configuration, it is possible to provide a user with advice information corresponding to the traveling state of the vehicle.

In the aspect, the on-board device may be configured to generate light or vibration via a second output device in the vehicle during the output process.

According to this configuration, it is possible to execute performance using light or vibration if necessary.

In the aspect, the server may be configured to acquire personal information of a user of the vehicle, and select, based on the personal information, the information data corresponding to the personal information. The information data may be transmitted to the on-board device.

According to this configuration, it is possible to sort and provide information corresponding to a user's taste and the like.

In the aspect, the information data may include a moving image file. The output process may be a process of reproducing the moving image file.

In the aspect, the personal information may include at least one of information related to an age of the user, information related to sex of the user, and information related to a family structure of the user.

According to this configuration, it is possible to output a variety of information data by reproduction of a moving image file.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram illustrating a configuration of an information output system for a vehicle according to an embodiment;
FIG. 2 is a diagram illustrating an example of a hardware configuration of a navigation device;
FIG. 3 is a diagram illustrating an example of personal information in a user information database;
FIG. 4 is a diagram illustrating an example of establishment reproduction data in an establishment reproduction database;
FIG. 5 is a diagram illustrating an example of destination weather reproduction data in a destination weather reproduction database;
FIG. 6A is a diagram illustrating an example of anniversary reproduction data in a date-dependent reproduction database;
FIG. 6B is a diagram illustrating an example of commercial reproduction data in the date-dependent reproduction database;
FIG. 7 is a flowchart schematically illustrating an example of a destination-dependent reproduction data transmitting process routine which is performed by a server 3;
FIG. 8 is a flowchart schematically illustrating an example of a vehicle position weather reproduction data transmitting process routine which is performed by the server 3;
FIG. 9 is a flowchart schematically illustrating an example of a commercial reproduction data transmitting process routine which is performed by the server 3;
FIG. 10 is a flowchart schematically illustrating an example of an anniversary reproduction data transmitting process routine which is performed by the server 3;
FIG. 11 is a flowchart schematically illustrating an example of an advice reproduction data transmitting process routine which is performed by the server 3;
FIG. 12 is a flowchart schematically illustrating an example of an opening reproduction process routine which is performed by an on-board device 2;
FIG. 13 is a flowchart schematically illustrating an example of an in-trip reproduction process routine which is performed by the on-board device 2;
FIG. 14 is a flowchart schematically illustrating an example of an advice reproduction data reproducing process routine which is performed by the on-board device 2;
FIG. 15 is a flowchart schematically illustrating an example of an ending reproduction process routine which is performed by the on-board device 2;
FIG. 16 is a diagram illustrating an example of a state in which opening reproduction associated with vehicle position weather reproduction data is performed;
FIG. 17 is a diagram illustrating an example of a state in which advice reproduction data is reproduced; and
FIG. 18 is a diagram illustrating an example of a state in which establishment reproduction data for ending reproduction is reproduced on a display.

### DETAILED DESCRIPTION OF EMBODIMENTS

Hereinafter, embodiments of the invention will be described in detail with reference to the accompanying drawings. In the following description, the concept of "image" includes videos. That is, a video is a type of image. A moving image is an expression of a combination of a plurality of images and thus is an example of an expression which is output in the form of an image.

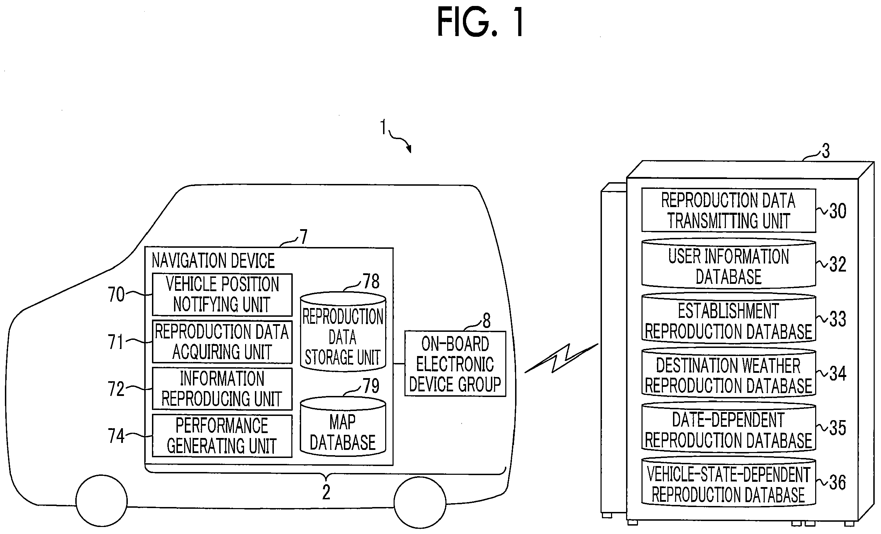

FIG. 1 is a diagram illustrating a configuration of an information output system for a vehicle.

The information output system for a vehicle 1 includes an on-board device 2 that is mounted in a vehicle and a server 3 (an example of a destination information providing server). The server 3 is disposed remotely from the on-board device 2. It is assumed that the on-board device 2 is mounted in each of a plurality of vehicles. In the following description, unless particularly mentioned, the on-board device 2 mounted in an arbitrary vehicle will be described. In the description with reference to FIGS. 1 to 6B and FIGS. 12 to 15, unless particularly mentioned, "vehicle" denotes a vehicle in which the on-board device 2 is mounted.

The on-board device 2 includes a navigation device 7 and an on-board electronic device group 8.

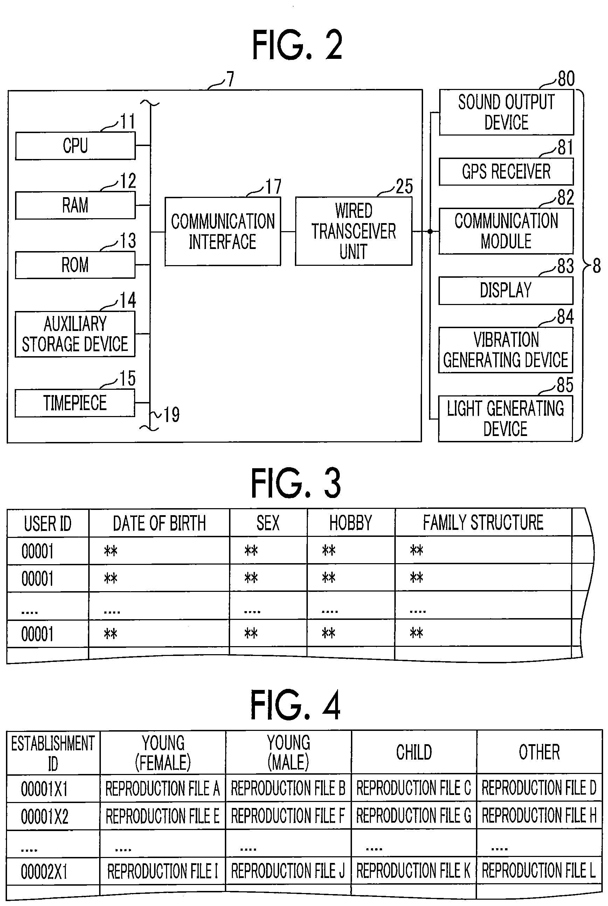

FIG. 2 is a diagram illustrating an example of a hardware configuration of the navigation device 7. FIG. 2 schematically illustrates an example of elements included in the on-board electronic device group 8 in association with the hardware configuration of the navigation device 7.

The navigation device 7 includes a central processing unit (CPU) 11, a random access memory (RAM) 12, a read only memory (ROM) 13, an auxiliary storage device 14, a timepiece 15, and a communication interface 17 which are connected via a bus 19 and a wired transceiver unit 25 connected to the communication interface 17. The auxiliary storage device 14 is, for example, a flash memory, a hard disk drive (HDD), or a solid state drive (SSD).

The wired transceiver unit 25 includes a transceiver unit that can communicate using a vehicle network such as a controller area network (CAN), a local interconnect network (LIN), or Ethernet. The navigation device 7 may include a wireless transceiver unit (not illustrated) that is connected to the communication interface 17 in addition to the wired transceiver unit 25. In this case, the wireless transceiver unit may include a near field communication (NFC) unit, a Bluetooth (registered trademark) communication unit, a wireless-fidelity (Wi-Fi) transceiver unit, or an infrared transceiver unit.

The on-board electronic device group 8 includes a sound output device 80 (an example of a first output device), a Global Positioning System (GPS) receiver 81, a communication module 82, a display 83 (an example of a first output device), a vibration generating device 84 (an example of a second output device), and a light generating device 85 (an example of a second output device).

The sound output device 80 is a device that outputs a sound. The sound output device 80 can be embodied by a speaker or the like. A plurality of sound output devices 80 may be provided.

The GPS receiver 81 measures a vehicle position based on radio waves from GPS satellites.

The communication module 82 is a transceiver unit that can communicate wirelessly using a wireless communication network of a mobile phone.

The display 83 is, for example, a touch panel type liquid crystal display. The display 83 is disposed at a position which can be viewed by a driver. The display 83 is a display that is fixed in a vehicle. The display 83 may be a display of a mobile terminal (for example, a smartphone or a tablet) which can be carried into the vehicle. In this case, communication between the mobile terminal and the navigation device 7 can be embodied, for example, via the Bluetooth communication unit (an element of the wireless transceiver unit).

The vibration generating device 84 is buried in a seat. The vibration generating device 84 applies vibration to a user who sits on the seat when it is driven.

The light generating device 85 is disposed in a vehicle cabin. The light generating device 85 is formed of, for example, an LED. A plurality of light generating devices 85 may be provided. The light generating device 85 may be embodied by a vehicle indoor lamp which is generally provided or may be provided separately from the vehicle indoor lamp.

The function of the navigation device 7 will be described below with reference back to FIG. 1.

As illustrated in FIG. 1, the navigation device 7 includes a vehicle position notifying unit 70, a reproduction data acquiring unit 71, an information reproducing unit 72, and a performance generating unit 74. The vehicle position notifying unit 70, the reproduction data acquiring unit 71, the information reproducing unit 72, and the performance generating unit 74 can be embodied by causing the CPU 11 illustrated in FIG. 2 to execute one or more programs stored in the ROM 13. The navigation device 7 further includes a reproduction data storage unit 78 and a map database 79. The reproduction data storage unit 78 and the map database 79 can be embodied by the auxiliary storage device 14 illustrated in FIG. 2.

The vehicle position notifying unit 70 periodically transmits position information of the vehicle to the server 3 in a started state of the vehicle. The started state of the vehicle is a state in which an ignition switch (not illustrated) is turned on, and corresponds to a state in which a power supply switch (not illustrated) that turns on a drive motor (not illustrated) and a main battery (not illustrated) is turned on in the case of an electric vehicle.

The reproduction data acquiring unit 71 acquires reproduction data corresponding to a destination of the vehicle, reproduction data corresponding to a current date or time (an example of first predetermined information data), reproduction data corresponding to a traveling state of the vehicle from the server 3. For example, when a destination of the vehicle is set before the vehicle is started (for example, when a user notifies the server 3 of a destination using a PC or a smartphone in advance), the reproduction data acquiring unit 71 may acquire reproduction data from the server 3 before the vehicle is started. Reproduction data corresponding to a current date or a current date and time may be downloaded in a push manner form the server 3 whenever the reproduction data is updated. Reproduction data corresponding to a traveling state of the vehicle is downloaded in a push manner from the server 3 if necessary.

Reproduction data corresponding to a destination of the vehicle is reproduction data related to the destination. For example, the reproduction data includes information on the weather of the destination. When a destination is a point indicating an establishment, the reproduction data includes at least one of information on the weather of the destination and newest information on the establishment. The information on the weather of a destination is general weather information such as rainy or fair or more detailed weather information such as an amount of rainfall. For example, when the establishment is an amusement park, the newest information on the establishment is operation information of attractions or waiting time information of each attraction. For example, when the establishment is a shopping mall, the newest information on the establishment is information on shops having sales or limited items.

Reproduction data corresponding to a current date or a current date and time is reproduction data of information (an example of first information) of which a value of reproduction changes significantly depending on the date or the date and time. The reproduction data corresponding to a current date or a current date and time may include reproduction data corresponding to an anniversary (a birthday or a wedding anniversary) of a user of the vehicle or reproduction data relevant to the vehicle. When reproduction data corresponding to an anniversary of the user of the vehicle is reproduced on the anniversary, the value of reproduction thereof increases significantly. The reproduction data corresponding to an anniversary of the user of the vehicle includes a message or an image celebrating the anniversary and can be reproduced on the anniversary as a surprise. The reproduction data relevant to the vehicle is, for example, a newest version of a commercial relevant to the vehicle. For example, the reproduction data corresponding to a current date or a current date and time is a newest version of a commercial with a story (a story having continuity) or a commercial of an Internet-only version. The version or the content of the commercial with a story or the commercial of the Internet-only version changes at a certain date or a certain date and time and thus serves as reproduction data corresponding to a current date or a current date and time.

Reproduction data corresponding to a traveling state of the vehicle is reproduction data of information of which a value of reproduction changes significantly depending on the current traveling state of the vehicle. The reproduction data corresponding to a traveling state of the vehicle is reproduction data (an example of first predetermined information data) including information (an example of second information) on the weather at the current vehicle position and is, for example, reproduction data of typhoon approach information for a region including the vehicle position. The reproduction data corresponding to a traveling state of the vehicle is reproduction data (an example of second predetermined information data) including advice information corresponding to the traveling state of the vehicle and is, for example, reproduction data corresponding to advice information (for example, information for encouraging to check tire air pressure or information for encouraging to attach chains when there are chain regulations) before entering an expressway or the like or reproduction data corresponding to a countermeasure against an abnormality occurring in the vehicle.

In the following description, when reproduction data corresponding to a destination of the vehicle, reproduction data corresponding to a current date or a current date and time, and reproduction data corresponding to a traveling state of the vehicle are distinguished, the reproduction data corresponding to a destination of the vehicle is referred to as "destination-dependent reproduction data," the reproduction data corresponding to a current date or a current date and time is referred to as "date-dependent reproduction data," and the reproduction data corresponding to a traveling state of the vehicle is referred to as "vehicle-state-dependent reproduction data." Among the destination-dependent reproduction data, data relevant to information on the weather of a destination is referred to as "destination weather reproduction data," and data relevant to information on an establishment is referred to as "establishment reproduction data." Among the date-dependent reproduction data, reproduction data corresponding to an anniversary of the user of the vehicle is referred to as "anniversary reproduction data," and reproduction data corresponding to a commercial relevant to the vehicle is referred to as "commercial reproduction data." Among the vehicle-state-dependent reproduction data, data relevant to weather information on a region including the current vehicle position is referred to as "vehicle position weather reproduction data," and data relevant to advice information is referred to as "advice reproduction data."

The information reproducing unit 72 reproduces the reproduction data acquired by the reproduction data acquiring unit 71 in the form of sounds and images via the sound output device 80 and the display 83. In this embodiment, for example, reproduction data is reproduced in the form of sounds and images, but reproduction data may be reproduced in the form of only sounds or in the form of only images.

The information reproducing unit 72 reproduces destination weather reproduction data and establishment reproduction data at the time of starting of the vehicle when the reproduction data has been acquired already at the time of starting of the vehicle (that is, when the reproduction data is downloaded while the vehicle is stopped). The time point at which the vehicle is started is a time point at which an ignition switch (not illustrated) is turned on, and corresponds to a time point at which a power supply switch (not illustrated) that turns on a drive motor (not illustrated) and a main battery (not illustrated) is turned on in the case of an electric vehicle. Reproduction which is performed at the time point at which the vehicle is started is also referred to as "opening reproduction." The information reproducing unit 72 reproduces the establishment reproduction data at a time point at which the vehicle arrives at a destination immediately before the display 83 changes from an ON state to an OFF state. The change of the display 83 from the ON state to the OFF state occurs when an ignition switch (not illustrated) is turned off, and occurs when a power supply switch (not illustrated) that turns on a drive motor (not illustrated) and a main battery (not illustrated) is turned off in the case of an electric vehicle. Hereinafter, reproduction which is performed at a time point at which the vehicle arrives at a destination is also referred to as "ending reproduction." The establishment reproduction data for ending reproduction is preferably different from the establishment reproduction data for opening reproduction. In this case, since different establishment reproduction data is reproduced at a time point at which the vehicle departs for a destination and at a time point at which the vehicle arrives at the destination, it is possible to realize fresh performance at individual times.

The information reproducing unit 72 reproduces the establishment reproduction data at a predetermined time point after the vehicle is started and before the vehicle arrives at a destination. Hereinafter, reproduction which is performed at the predetermined time point is also referred to as "in-trip reproduction." The establishment reproduction data for in-trip reproduction is preferably different from the establishment reproduction data for opening reproduction or the establishment reproduction data for ending reproduction. The predetermined time point may be, for example, a time point at which the vehicle arrives at a middle point of a route to the destination or a time point 10 minutes before the vehicle arrives at the destination. By performing in-trip reproduction, it is possible to effectively enhance a user's pleasure (elation) at a destination

The information reproducing unit 72 performs opening reproduction of the date-dependent reproduction data. For example, the information reproducing unit 72 first reproduces the date-dependent reproduction data and then outputs a map display when the display 83 is started due to starting of the vehicle.

When the reproduction data acquiring unit 71 downloads (acquires) the vehicle-state-dependent reproduction data before the vehicle is started, the information reproducing unit 72 performs opening reproduction. When the reproduction data acquiring unit 71 downloads the vehicle-state-dependent reproduction data after the vehicle is started, the information reproducing unit 72 performs the reproduction at that time point.

While the information reproducing unit 72 is reproducing the reproduction data, the performance generating unit 74 generates vibration and light via the vibration generating device 84 and the light generating device 85. For example, the performance generating unit 74 generates vibration and light to correspond to music or images of the reproduction data. Accordingly, it is possible to enhance performance effects associated with the reproduction data. In this embodiment, for example, vibration and light are generated, but it is also possible to output only vibration or only light. Alternatively, in a modified example, the performance generating unit 74 may be omitted.

The reproduction data storage unit 78 stores the reproduction data acquired by the reproduction data acquiring unit 71.

The map database 79 stores map data. The map data includes, for example, coordinate information of nodes corresponding to intersections or junctions/bifurcations of expressways, link information for connecting neighboring nodes, width information of roads corresponding to the links, and road types of national roads/prefectural roads/expressways corresponding to the links.

The function of the server 3 will be described below with reference back to FIG. 1. The hardware configuration of the server 3 is not illustrated. The basic architecture (configuration) of the server 3 is substantially the same as the configuration of the navigation device 7 illustrated in FIG. 2, except that processing capability and storage capacity thereof are strengthened.

As illustrated in FIG. 1, the server 3 includes a reproduction data transmitting unit 30, a user information database 32, an establishment reproduction database 33, a destination weather reproduction database 34, a date-dependent reproduction database 35, and a vehicle-state-dependent reproduction database 36. The reproduction data transmitting unit 30 can be embodied by causing the CPU to execute one or more programs stored in the ROM. The user information database 32, the establishment reproduction database 33, the destination weather reproduction database 34, the date-dependent reproduction database 35, and the vehicle-state-dependent reproduction database 36 can be embodied by an auxiliary storage device (for example, an HDD).

When the user of the vehicle notifies of a destination, the reproduction data transmitting unit 30 extracts establishment reproduction data corresponding to the destination from the establishment reproduction database 33 and transmits the extracted establishment reproduction data to the on-board device 2. The reproduction data transmitting unit 30 extracts the establishment reproduction data from the establishment reproduction database 33 based on the destination of the vehicle. Specifically, the reproduction data transmitting unit 30 extracts the establishment reproduction data corresponding to a POI associated with the destination of the vehicle from the establishment reproduction database 33. Establishment reproduction data is stored for each POI in the establishment reproduction database 33 (see FIG. 4). The destination of the vehicle is acquired in advance from a user as described above. In this case, the establishment reproduction data can be subjected to opening reproduction and can be also subjected to in-trip reproduction or ending reproduction. Alternatively, when the user inputs a destination to the navigation device 7 after the vehicle is started, the navigation device 7 may notify the server 3 of the input destination. In this case, the establishment reproduction data cannot be subjected to opening reproduction but can be subjected to in-trip reproduction or ending reproduction.

When a plurality of types of establishment reproduction data relevant to the same establishment are stored in the establishment reproduction database 33, the reproduction data transmitting unit 30 extracts establishment reproduction data suitable for personal information based on personal information of the user of the vehicle. The personal information of the user of the vehicle is information such as a date of birth, sex, and family structure of the user. The personal information of the user of the vehicle can be extracted from the user information database 32 (see FIG. 3). For example, when a plurality of types of establishment reproduction data are stored for each age or sex, the reproduction data transmitting unit 30 extracts establishment reproduction data suitable for the age and the sex of the user.

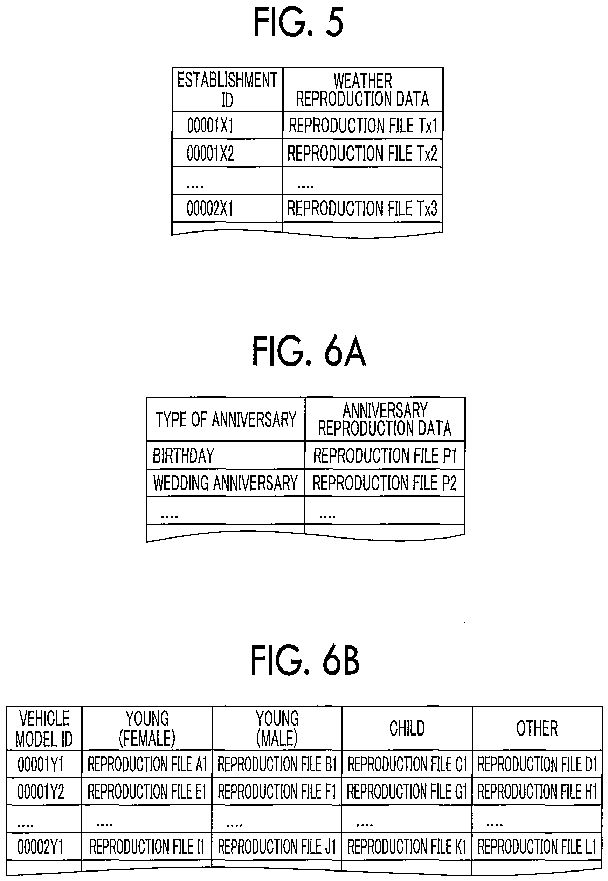

When the user of the vehicle notifies of a destination, the reproduction data transmitting unit 30 extracts destination weather reproduction data corresponding to the destination from the destination weather reproduction database 34 and transmits the extracted destination weather reproduction data to the on-board device 2. Newest destination weather reproduction data is stored for each POI in the destination weather reproduction database 34 (see FIG. 5). The newest destination weather reproduction data can be generated based on data acquired from a server (not illustrated) that provides weather information.

The reproduction data transmitting unit 30 extracts date-dependent reproduction data which is reproducible as described above in the vehicle from the date-dependent reproduction database 35 and transmits the extracted date-dependent reproduction data to the on-board device 2. The reproduction data transmitting unit 30 transmits the date-dependent reproduction data to the on-board device 2 in advance (before the vehicle is started) such that opening reproduction is possible. In this embodiment, newest date-dependent reproduction data at the current time point is stored in the date-dependent reproduction database 35 (see FIGS. 6A and 6B). In this case, the reproduction data transmitting unit 30 extracts the newest date-dependent reproduction data in the date-dependent reproduction database 35.

For example, the reproduction data transmitting unit 30 sets a reproducible date and time for anniversary reproduction data in advance and transmits the anniversary reproduction data to the on-board device 2 in advance. In this case, when the current date and time reaches the reproducible date and time, the information reproducing unit 72 reproduces the anniversary reproduction data at the time point at which the vehicle is started. The reproduction data transmitting unit 30 transmits commercial reproduction data to the on-board device 2 whenever the commercial reproduction data is updated. At this time, similarly, the reproduction data transmitting unit 30 may set a reproducible date and time in advance. In this case, when the current date and time reaches the reproducible date and time, the information reproducing unit 72 reproduces the commercial reproduction data at the time point at which the vehicle is started.

When a plurality of types of commercial reproduction data for the same vehicle model are stored in the date-dependent reproduction database 35, the reproduction data transmitting unit 30 preferably extracts commercial reproduction data suitable for personal information based on the personal information of the user of the vehicle. For example, when a plurality of types of establishment reproduction data are stored for each age or sex, the reproduction data transmitting unit 30 extracts commercial reproduction data suitable for the age and sex of the user.

At the time of transmitting various reproduction data as described above to the on-board device 2, the reproduction data transmitting unit 30 transmits, for example, reproduction data which has been encoded by a codec to the on-board device 2. Accordingly, it is possible to reduce a communication load.

The reproduction data transmitting unit 30 extracts vehicle-state-dependent reproduction data which is reproducible as described above in the vehicle from the vehicle-state-dependent reproduction database 36 and transmits the extracted vehicle-state-dependent reproduction data to the on-board device 2. Similarly, when a plurality of types of vehicle-state-dependent reproduction data for the same vehicle position are stored in the vehicle-state-dependent reproduction database 36, the reproduction data transmitting unit 30 preferably extracts the vehicle-state-dependent reproduction data suitable for personal information based on the personal information of the user of the vehicle. For example, when a plurality of types of advice reproduction data are stored for each age or each sex, the reproduction data transmitting unit 30 extracts the advice reproduction data suitable for the age and sex of the user.

As illustrated in FIG. 3, personal information is stored for each user ID in the user information database 32. Personal information is a variety of information such as age, sex, hobby, occupation, and favorite foods and is acquired, for example, at the time of initial registration in the form of a questionnaire. The personal information in the user information database 32 may be appropriately updated based on information uploaded from the on-board device 2 of the vehicle or the like even after initial registration.

As illustrated in FIG. 4, establishment reproduction data is stored for each establishment ID in the establishment reproduction database 33. Establishment ID corresponds to POI_ID. The establishment reproduction data may be prepared on the establishment side and then may be provided to the server 3. In the example illustrated in FIG. 4, the establishment reproduction data is represented by Files A, B, and the like and is stored for each age or sex. It is assumed that the files illustrated in FIG. 4 are, for example, moving image files (for example, in an MPEG format).

As illustrated in FIG. 5, destination weather reproduction data is stored for each establishment ID in the destination weather reproduction database 34. The destination weather reproduction data is updated, for example, at predetermined time intervals. In the example illustrated in FIG. 5, the destination weather reproduction data is represented by Files Tx1, Tx2, and the like.

In the date-dependent reproduction database 35, anniversary reproduction data is stored for each type of anniversary as illustrated in FIG. 6A, and commercial reproduction data is stored for each vehicle model ID as illustrated in FIG. 6B. In the example illustrated in FIG. 6A, the anniversary reproduction data is represented by Files PI, P2, and the like. In the example illustrated in FIG. 6B, the commercial reproduction data is represented by Files A1, B1, and the like and is stored for each age or sex. The vehicle mode IDs may differ depending on model years or models.

Vehicle-state-dependent reproduction data is stored in the vehicle-state-dependent reproduction database 36. Although not illustrated in the drawings, the vehicle-state-dependent reproduction data is stored for each age or sex similarly to the other reproduction data mentioned above. Although not illustrated in the drawings, advice reproduction data of the vehicle-state-dependent reproduction data may be additionally stored for each vehicle model ID. This is because appropriate advice may differ depending on the vehicle models.

According to this embodiment, since opening reproduction of destination-dependent reproduction data or the like is performed as described above, a user in the vehicle can obtain newest information of a destination or recall amusement at the destination and driving can be more enjoyable. Since opening reproduction of date-dependent reproduction data is performed as described above, it is possible to perform opening reproduction of a newest commercial or an image serving as a surprise depending on a date or the like and driving can be more enjoyable for a user.

According to this embodiment, since reproduction of vehicle-state-dependent reproduction data is performed as described above, a user in the vehicle can obtain useful information depending on a traveling state of the vehicle. Accordingly, it is possible to enhance safety of driving.

In this embodiment, all of destination-dependent reproduction data, date-dependent reproduction data, and vehicle-state-dependent reproduction data can be reproduced, but it is also possible to reproduce only one or two thereof.

An operation example of the information output system for a vehicle 1 will be described below.

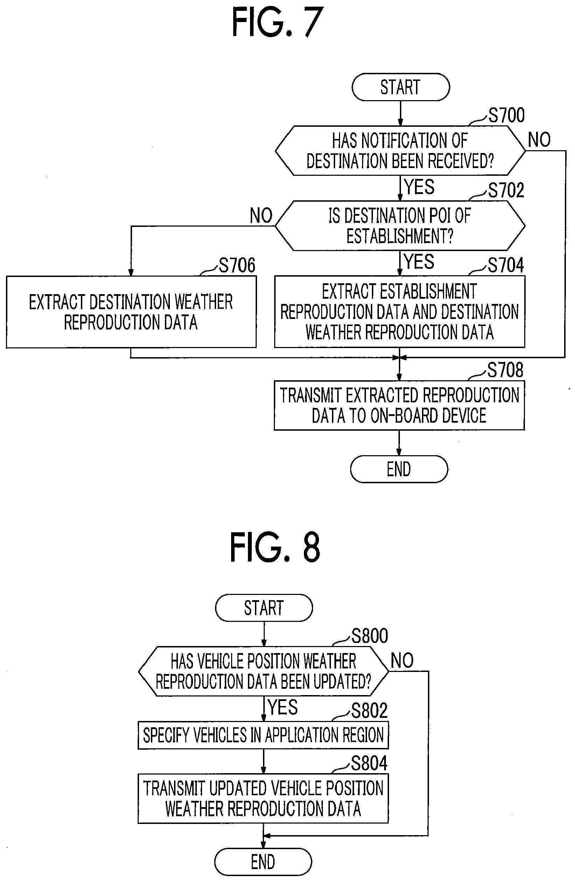

An operation example of the server 3 will be first described below with reference to FIGS. 7 to 11.

FIG. 7 is a flowchart schematically illustrating an example of a destination-dependent reproduction data transmitting process routine which is performed by the server 3. FIG. 7 illustrates a process routine for a specific vehicle, but the same process is performed in parallel for a plurality of vehicles (users).

In Step S700, the reproduction data transmitting unit 30 determines whether a user of a specific vehicle has notified of a destination. The process routine transitions to Step S702 when the determination result is "YES," and transitions to Step S704 otherwise.

In Step S702, the reproduction data transmitting unit 30 determines whether the destination is a POI of an establishment. The process routine transitions to Step S704 when the determination result is "YES," and transitions to Step S706 otherwise.

In Step S704, the reproduction data transmitting unit 30 extracts establishment reproduction data and destination weather reproduction data corresponding to the destination acquired in Step S700 from the establishment reproduction database 33 and the destination weather reproduction database 34.

In Step S706, the reproduction data transmitting unit 30 extracts destination weather reproduction data corresponding to the destination acquired in Step S700 from the destination weather reproduction database 34.

In Step S708, the reproduction data transmitting unit 30 transmits the extracted reproduction data described above to the on-board device 2.

According to the process routine illustrated in FIG. 7, the server 3 can transmit destination-dependent reproduction data to the on-board device 2 when a user has notified of a destination.

FIG. 8 is a flowchart schematically illustrating an example of a vehicle position weather reproduction data transmitting process routine which is performed by the server 3.

In Step S800, the reproduction data transmitting unit 30 determines whether the vehicle position weather reproduction data in the vehicle-state-dependent reproduction database 36 has been updated. Updating of the vehicle position weather reproduction data is performed, for example, when a significant change in the weather such as an approach of a typhoon occurs. In FIG. 8, it is assumed that the vehicle position weather reproduction data is prepared and updated for each region. The process routine transitions to Step S802 when the determination result is "YES," and transitions to Step S804 otherwise.

In Step S802, the reproduction data transmitting unit 30 specifies vehicles in an application region of the updated vehicle position weather reproduction data. The vehicles in the application region can be specified based on a relationship between the application region and vehicle position information of the vehicles. The position information of each vehicle can be acquired from the corresponding vehicle. That is, as described above, the position information of each vehicle is transmitted from the corresponding vehicle to the server 3 at predetermined time intervals in a state in which the vehicle has been started.

In Step S804, the reproduction data transmitting unit 30 transmits the updated vehicle position weather reproduction data to the on-board devices 2 of the vehicles in the application region specified in Step S802.

According to the process routine illustrated in FIG. 8, when the vehicle position weather reproduction data has been updated, the server 3 can transmit the updated vehicle position weather reproduction data to the on-board devices 2 of the vehicles located in the corresponding region.

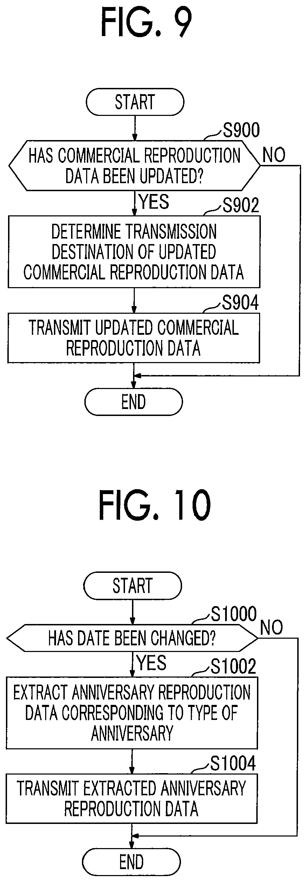

FIG. 9 is a flowchart schematically illustrating an example of a commercial reproduction data transmitting process routine which is performed by the server 3.

In Step S900, the reproduction data transmitting unit 30 determines whether commercial reproduction data in the date-dependent reproduction database 35 has been updated. The process routine transitions to Step S902 when the determination result is "YES," and transitions to Step S904 otherwise.

In Step S902, the reproduction data transmitting unit 30 determines vehicles which are transmission destinations of the updated commercial reproduction data. The transmission destination of the updated commercial reproduction data is vehicles of a vehicle model relevant to the commercial reproduction data.

In Step S904, the reproduction data transmitting unit 30 transmits the updated commercial reproduction data to the on-board devices 2 of the vehicles which are the transmission destinations determined in Step S902.

According to the process routine illustrated in FIG. 9, when the commercial reproduction data in the date-dependent reproduction database 35 has been updated, the server 3 can transmit the updated commercial reproduction data to the on-board devices 2 of the vehicles located in the corresponding region.

FIG. 10 is a flowchart schematically illustrating an example of an anniversary reproduction data transmitting process routine which is performed by the server 3. The process routine illustrated in FIG. 10 is performed only once when a date is changed.

In Step S1000, the reproduction data transmitting unit 30 determines whether a date has been changed. The process routine transitions to Step S1002 when the determination result is "YES," and transitions to Step S1004 otherwise.

In Step S1002, the reproduction data transmitting unit 30 specifies a user having an anniversary today based on personal information in the user information database 32 and extracts anniversary reproduction data corresponding to the type of the anniversary from the date-dependent reproduction database 35 (see FIG. 6A). The reproduction data transmitting unit 30 specifies, for example, users having a birthday or a wedding anniversary today and extracts anniversary reproduction data corresponding to the type of the anniversary.

In Step S1004, the reproduction data transmitting unit 30 transmits the extracted anniversary reproduction data to the on-board devices 2 of the vehicles of the corresponding users.

According to the process routine illustrated in FIG. 10, when a date has been changed, the server 3 can transmit anniversary reproduction data corresponding to the types of anniversaries to the on-board devices 2 of the users having an anniversary today.

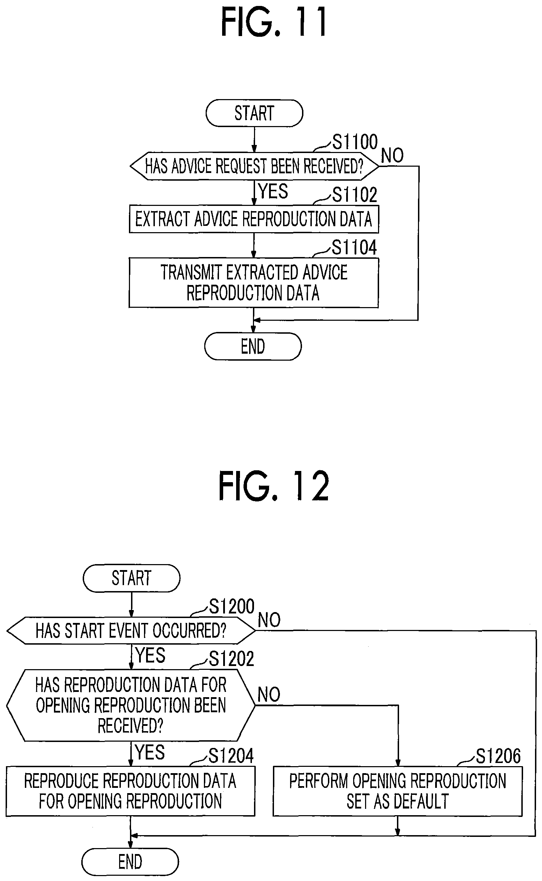

FIG. 11 is a flowchart schematically illustrating an example of an advice reproduction data transmitting process routine which is performed by the server 3.

In Step S1100, the reproduction data transmitting unit 30 determines whether an advice request (which will be described later) has been received from the on-board device 2. The process routine transitions to Step S1102 when the determination result is "YES," and transitions to Step S1104 otherwise.

In Step S1102, the reproduction data transmitting unit 30 extracts advice reproduction data corresponding to the advice request received in Step S1100 from the vehicle-state-dependent reproduction database 36. For example, the reproduction data transmitting unit 30 extracts advice reproduction data corresponding to the model of the vehicle having transmitted the advice request or a current state (for example, a shortage of tire air pressure) of the vehicle from the vehicle-state-dependent reproduction database 36.

In Step S1104, the reproduction data transmitting unit 30 transmits the extracted advice reproduction data to the on-board device 2 of the vehicle which is the request source.

According to the process routine illustrated in FIG. 11, when an advice request is issued from the on-board device 2, the server 3 can transmit advice reproduction data to the on-board device 2 of the vehicle which is the request source.

An operation example of the on-board device 2 will be described below with reference to FIGS. 12 to 15. In FIGS. 12 to 15, it is assumed that, when the on-board device 2 receives a variety of reproduction data from the server 3 described above with reference to FIGS. 7 to 11, the reproduction data acquiring unit 71 stores the received reproduction data in the auxiliary storage device 14. It is also assumed that the reproduction data acquiring unit 71 stores reproduction data for opening reproduction (coded data encoded by a codec) in a storage device (for example, the auxiliary storage device 14 or the RAM) that can perform high-speed reading in a state in which the coded data is decoded. Accordingly, the reproduction data for opening reproduction can be reproduced without any delay at the time of starting of the vehicle.

FIG. 12 is a flowchart schematically illustrating an example of an opening reproduction process routine which is performed by the on-board device 2. The process routine illustrated in FIG. 12 is a process routine which is performed only once when a start event of the vehicle (for example, an ON event of an ignition switch) occurs.

In Step S1200, the information reproducing unit 72 determines whether a start event of the vehicle has occurred. The process routine transitions to Step S1202 when the determination result is "YES," and the process routine ends otherwise.

In Step S1202, the information reproducing unit 72 determines whether reproduction data which is reproducible for opening reproduction has been received. The reproduction data which is reproducible for opening reproduction is, for example, destination-dependent reproduction data, date-dependent reproduction data, or vehicle-state-dependent reproduction data which has been acquired before the vehicle is started as described above. The process routine transitions to Step S1204 when the determination result is "YES," and transitions to Step S1206 otherwise.

In Step S1204, the information reproducing unit 72 reproduces (performs opening reproduction of) the reproduction data which is reproducible for opening reproduction. When the opening reproduction is performed, the information reproducing unit 72 deletes the reproduction data for opening reproduction from the auxiliary storage device 14.

In Step S1206, the information reproducing unit 72 reproduces given reproduction data (the reproduction data for opening reproduction) which is set as a default.

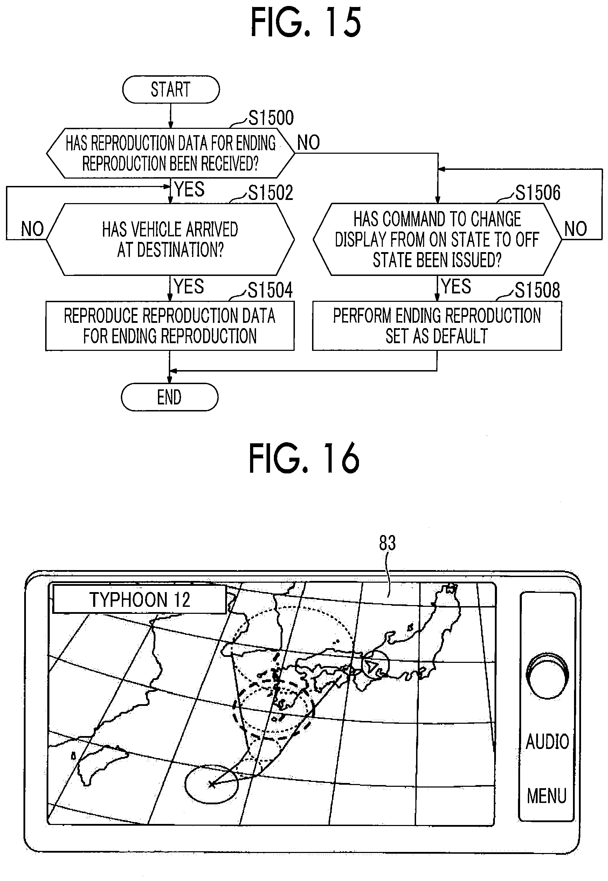

According to the process routine illustrated in FIG. 12, it is possible to perform opening reproduction based on the destination-dependent reproduction data, the date-dependent reproduction data, or the like acquired before the vehicle is started. For example, FIG. 16 illustrates an example of an opening reproduction state relevant to the vehicle position weather reproduction data on the display 83. In the example illustrated in FIG. 16, a typhoon approaches the vicinity of a departure place (the vehicle position). Accordingly, a user can determine whether to depart in consideration of the state of the typhoon and obtain useful information from the opening reproduction.

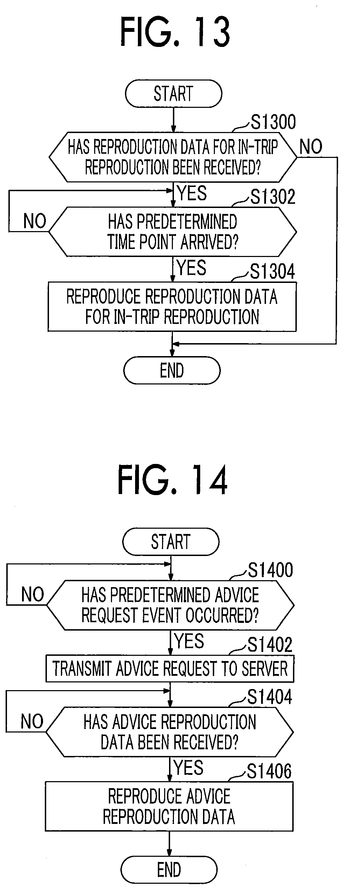

FIG. 13 is a flowchart schematically illustrating an example of an in-trip reproduction process routine which is performed by the on-board device 2. The process routine illustrated in FIG. 13 is performed during a trip.

In Step S1300, the information reproducing unit 72 determines whether reproduction data which is reproducible for in-trip reproduction has been received. The reproduction data which is reproducible for in-trip reproduction is establishment reproduction data for in-trip reproduction as described above. The establishment reproduction data for in-trip reproduction may be transmitted to the on-board device 2 along with the establishment reproduction data for opening reproduction or may be individually transmitted to the on-board device 2. The process routine transitions to Step S1302 when the determination result is "YES," and the process routine ends otherwise.

In Step S1302, the information reproducing unit 72 determines whether a predetermined time point has arrived. The predetermined time point is a time point indicating the time at which the establishment reproduction data for in-trip reproduction is reproduced and an example thereof is a time point at which the vehicle arrives at a middle point of a route to a destination as described above. The process routine transitions to Step S1304 when the determination result is "YES," and waits in the waiting state until the predetermined time point arrives otherwise.

In Step S1304, the information reproducing unit 72 reproduces (performs in-trip reproduction of) the establishment reproduction data for in-trip reproduction. When the in-trip reproduction is performed, the information reproducing unit 72 deletes the establishment reproduction data subjected to the in-trip reproduction from the auxiliary storage device 14.

According to the process routine illustrated in FIG. 13, it is possible to perform in-trip reproduction based on the establishment reproduction data for in-trip reproduction. Accordingly, it is possible to effectively enhance amusement (elation) of a user with a destination during a trip.

FIG. 14 is a flowchart schematically illustrating an example of an advice reproduction data reproducing process routine which is performed by the on-board device 2. The process routine illustrated in FIG. 14 is performed during a trip.

In Step S1400, the reproduction data acquiring unit 71 determines whether a predetermined advice request event has occurred. The predetermined advice request event is an event in which reproduction of the advice reproduction data becomes useful and examples thereof include an event in which the vehicle is about to enter an expressway or an event in which a certain abnormality occurs in the traveling state of the vehicle. The event in which the vehicle is about to enter an expressway can be detected based on a relationship between the vehicle position information and the map data in the map database 79. The event in which a certain abnormality occurs in the traveling state of the vehicle can be detected based on diagnostic information. The process routine transitions to Step S1402 when the determination result is "YES," and waits in the waiting state until the predetermined advice request event occurs otherwise.

In Step S1402, the reproduction data acquiring unit 71 transmits an advice request to the server 3. The advice request includes the type of the advice request event, that is, information indicating a current state of the vehicle. When the advice request is received, the server 3 transmits advice reproduction data to the vehicle (see FIG. 11).

In Step S1404, the information reproducing unit 72 determines whether the reproduction data acquiring unit 71 has acquired the advice reproduction data from the server 3. The process routine transitions to Step S1406 when the determination result is "YES." When the determination result is otherwise, the reproduction data acquiring unit 71 goes into a waiting state in which it waits until the advice reproduction data is acquired.

In Step S1406, the information reproducing unit 72 reproduces the advice reproduction data acquired by the reproduction data acquiring unit 71. After the advice reproduction data is reproduced, the information reproducing unit 72 deletes the reproduced advice reproduction data from the auxiliary storage device 14.

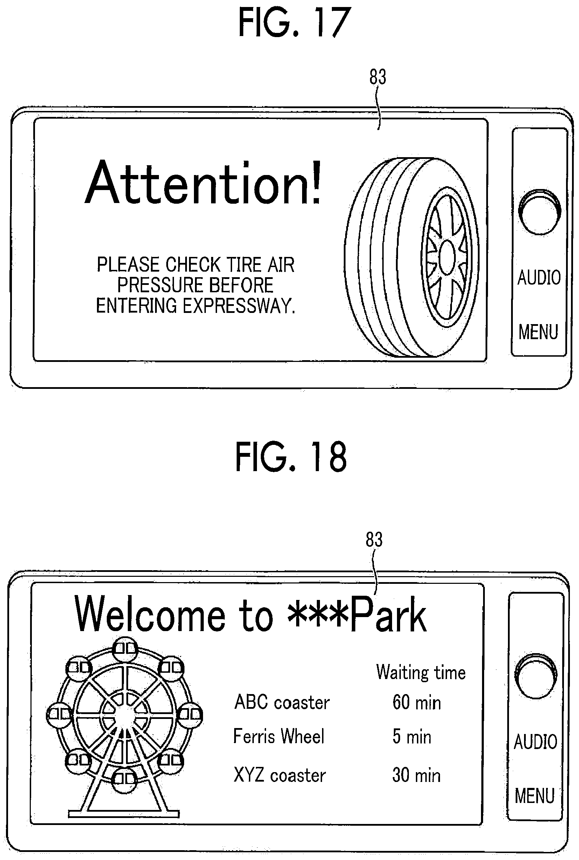

According to the process routine illustrated in FIG. 14, when a predetermined advice request event occurs, it is possible to reproduce the advice reproduction data acquired from the server 3. Accordingly, it is possible to reproduce advice reproduction data corresponding to an advice request event occurring in the vehicle during a trip. Accordingly, for example, when an unexpected problem or the like occurs, a user can understand a countermeasure based on the advice reproduction data and it is possible to enhance convenience for a user. For example, FIG. 17 illustrates an example of a state in which advice reproduction data is reproduced on the display 83. In the example illustrated in FIG. 17, a state in which advice reproduction data corresponding to a state in which the vehicle is about to enter an expressway is reproduced. Accordingly, a user is encouraged to check tire air pressures before entering the expressway. In this way, according to the process routine illustrated in FIG. 14, it is possible to obtain advice information depending on a traveling state.

FIG. 15 is a flowchart schematically illustrating an example of an ending reproduction process routine which is performed by the on-board device 2. The process routine illustrated in FIG. 15 is performed during a trip.

In Step S1500, the information reproducing unit 72 determines whether reproduction data which is reproducible for ending reproduction has been received. The reproduction data which is reproducible for ending reproduction is establishment reproduction data for ending reproduction as described above. The establishment reproduction data for ending reproduction may be transmitted to the on-board device 2 along with the establishment reproduction data for opening reproduction or may be individually transmitted to the on-board device 2. The process routine transitions to Step S1502 when the determination result is "YES," and transitions to Step S1506 otherwise.

In Step S1502, the information reproducing unit 72 determines whether the vehicle has arrived at a destination. The process routine transitions to Step S1504 when the determination result is "YES," and waits in the waiting state until the vehicle arrives at the destination otherwise.

In Step S1504, the information reproducing unit 72 reproduces (performs ending reproduction of) the establishment reproduction data for ending reproduction. For example, the information reproducing unit 72 reproduces the establishment reproduction data for ending reproduction when display of the display 83 is deleted at the time of turning off an ignition switch. After the ending reproduction is performed, the information reproducing unit 72 deletes the establishment reproduction data subjected to the ending reproduction from the auxiliary storage device 14.

In Step S1506, the information reproducing unit 72 determines whether a command to change the display 83 from an ON state to an OFF state has been issued. The command to change the display 83 from the ON state to the OFF state is issued, for example, with an ignition switch OFF event as described above. The process routine transitions to Step S1508 when the determination result is "YES," and waits in the waiting state until the command to change the display 83 from the ON state to the OFF state is issued otherwise.

In Step S1508, the information reproducing unit 72 reproduces given reproduction data (the reproduction data for ending reproduction) which is set as a default.

According to the process routine illustrated in FIG. 15, it is possible to perform ending reproduction based on the establishment reproduction data for ending reproduction. Accordingly, when the vehicle arrives at a destination, it is possible to effectively enhance amusement (elation) of the user with the destination. FIG. 18 illustrates an example of a state in which establishment reproduction data for ending reproduction is reproduced on the display 83. In the example illustrated in FIG. 18, the establishment reproduction data for ending reproduction includes waiting times for principal attractions. Accordingly, it is possible to effectively enhance amusement (elation) of a user with a destination and to allow the user to obtain information on the establishment. In the example illustrated in FIG. 18, since the establishment reproduction data for ending reproduction includes information on the waiting times, the establishment reproduction data for ending reproduction is preferably acquired from the server 3 by requesting the establishment reproduction data from the server 3 immediately before the vehicle arrives at the destination. Accordingly, the user can obtain newest information on the establishment when the user arrives at the destination.

While embodiments have been described above in detail, the invention is not limited to the specific embodiments and can be modified and changed in various forms within the scope of the appended claims. All or some of the elements in the above-mentioned embodiments may be combined.

For example, in the above-mentioned embodiments, reproduction of reproduction data in the form of an image is realized using the display 83, but the invention is not limited thereto. For example, reproduction of reproduction data in the form of an image may be realized using an on-board projector (not illustrated). In this case, reproduction data is output in the form of an image which is projected by the projector. In this case, projection may be realized using a projection mapping technique. The reproduction of reproduction data in the form of an image may be realized using both the display 83 and the projector.

In the above-mentioned embodiments, reproduction of reproduction data in the form of an image (reproduction of a moving image) is realized, but output of still image data (output in the form of an image) may be realized instead of reproduction of reproduction data in the form of a moving image. The navigation device 7 may perform the above-mentioned functions in cooperation with an audio device.

## Claims

1. An information output system for a vehicle comprising:
an on-board device (2) mounted in the vehicle; and
a server (3) configured to
communicate with the on-board device (2), and
transmit, to the on-board device, information data including at least one of destination information data corresponding to a destination of the vehicle and first predetermined information data, the first predetermined information data including at least one of first information and second information, the first information corresponding to a current date or the current date and current time, the second information being on weather related to a current position of the vehicle, wherein
the on-board device (2) is configured to perform an output process of outputting, via a first output device (80, 83) in the vehicle, at least one of a first still image, a first moving image, and a first sound, the first still image, the first moving image, and the first sound corresponding to the destination information data or the first predetermined information data.

2. The information output system for a vehicle according to claim 1, wherein
the server (3) is configured to transmit the destination information data to the on-board device (2) when the server is notified of the destination of the vehicle from a user of the vehicle.

3. The information output system for a vehicle according to claim 1, wherein
the server (3) is configured to transmit the first information data to the on-board device (2) before the vehicle is started.

4. The information output system for a vehicle according to claim 1, wherein
the on-board device (2) is configured to perform the output process at, at least one of a time point at which the vehicle is started, a predetermined time point during movement of the vehicle to the destination, and a time point at which the vehicle arrives at the destination.

5. The information output system for a vehicle according to any one of claims 1 to 4, wherein
the destination information data includes information on weather of the destination when the destination is not a point indicating an establishment, and the destination information data includes at least one of the information on weather of the destination and newest information of information on the establishment when the destination is the point indicating the establishment.

6. The information output system for a vehicle according to claim 1, wherein
the information data includes second predetermined information data,
the server (3) is configured to transmit, to the on-board device (2), the second predetermined information data including advice information corresponding to a traveling state of the vehicle, and
the output process includes outputting, via the first output device (80, 83) depending on the traveling state of the vehicle, at least one of a second still image, a second moving image, and a second sound, the second still image, the second moving image, and the second sound corresponding to the second predetermined information data .

7. The information output system for a vehicle according to any one of claims 1 to 6, wherein
the on-board device (2) is configured to generate light or vibration via a second output device (84, 85) in the vehicle during the output process.

8. The information output system for a vehicle according to any one of claims 1 to 7, wherein
the server (3) is configured to
acquire personal information of a user of the vehicle, and
select, based on the personal information, the information data corresponding to the personal information, the selected information data being transmitted to the on-board device (2).

9. The information output system for the vehicle according to any one of claims 1 to 8, wherein
the information data includes a moving image file and the output process is a process of reproducing the moving image file.

10. The information output system for a vehicle according to claim 8, wherein
the personal information includes at least one of information related to an age of the user, information related to sex of the user, and information related to a family structure of the user.
